# EUROPEAN PATENT SPECIFICATION

(11) **EP 0 750 889 B1**
(45) Date of publication and mention of the grant of the patent: **05.12.2001**
(21) Application number: 96830369.3
(22) Date of filing: 28.06.1996
(51) Int. Cl.: A61C 19/00

(54) **A control device for polymerising lamps**
Kontrollvorrichtung für Polymerisierungslampe
Dispositif de contrôle pour lampe à polymériser

(30) Priority: 29.06.1995 IT BO950326
(43) Date of publication of application: 02.01.1997
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- DE-A- 3 411 994
- DE-A- 3 910 438
- US-A- 5 233 283

## Description

The present invention relates to a dental unit with a control device for polymerising lamps.

In the sector for auxiliary instruments or handpieces on the said dental units, it is known that polymerising lamps are used by the dental surgeon or assistant to reduce the time required to harden the ceramic pastes used for fillings by concentrating light upon the said paste and thus promoting the catalysis of the entire filling paste.

The afore-mentioned lamps consist of a housing for light generating devices (the main component being a halogen bulb), said light being concentrated, filtered and directed into a "tube" defined by an optic fibre tip which is connected to one end of the housing so as to generate a light flux which exits the latter, concentrated in a given direction and with a constant intensity.

Amongst the operations effected using such lamps, the phase which requires the greatest degree of supervision is the length of the polymerising treatment applied to the pastes using the lamp: in fact, the said phase determines a change in the state of the product, with the consequent diversification of the surface of the paste on the filling.

The surfaces of the majority of pastes used for fillings shrink during polymerisation (due to the change of state), although these surfaces must perfectly fill the cavity in a tooth which has been operated upon. If they do not, the tooth cavity may be subject to infiltration or gaps with a significant risk of new decay, due to the excessive shrinkage of the paste.

Therefore, to reduce the risk of fillings being infiltrated, dental surgeons use a method which envisages the creation of small successive layers of paste, precisely dosed, then polymerised with an equal degree of precision.

The length of the polymerising treatment is normally controlled by fitting the afore-mentioned lamps with a timing device, that is to say, a device which measures the minimum treatment time required for the pastes to reach optimum hardness: the object being to minimise the patient's discomfort and avoid any unnecessary use of the lamp.

It is, therefore, logical that with such a method, the dental surgeon must know exactly whether or not the light energy, that is to say the luminous intensity, supplied by the lamp during treatment remains unchanged, i.e.: is not reduced due to the natural "ageing" of the afore-mentioned halogen bulb: with this information, the dental surgeon can adjust the time factor, that is to say, lengthen the treatment on the paste to compensate a reduction in the light output of the lamp.

Special apparatus for the measurement of the lamp light signal are currently used to control the luminous intensity of the polymerising lamp; however, the said apparatus are not attached to the dental unit and are normally supplied to service personnel, who control the lamp only during ordinary maintenance operations: this means that the lamp is only occasionally controlled, and the dental surgeon is obliged to adjust the treatment time in accordance with a theoretical reduction in the light output of the lamp, or to change the bulb earlier than scheduled.

It is also known from document DE 3411994 an irradiation lamp for a hand apparatus for photopolymerisation in the field of dentistry. The r.m.s. (root mean square) value of the lamp voltage is determined with the aid of a second lamp which is connected in parallel with the irradiation lamp and of a photodetector, which is illuminated by said second lamp, as a control variable. In the event of a deviation from the predetermined desired value, the lamp voltage is readjusted by means of an electronic switch, via a regulator which is connected to the photodetector.

The Applicant has designed and created a control device for polymerising lamps, configured in such a way that it is convenient, fast and easily used directly by the dental surgeon, allowing him/her to constantly control the efficiency of the lamp in the correct manner.

The technical features of the present invention, in accordance with the aforesaid objects, are clearly illustrated in the claims herein, and the advantages of the said features are more clearly described in the detailed description below, with reference to the accompanying drawings, which illustrate an embodiment by way of example only, and in which:
- figure 1 is a block diagram illustrating two embodiments of the control device for polymerising lamps disclosed;
- figure 2 is a perspective view of a dental unit fitted with the device shown in figure 1, with some parts cut away to better illustrate others;
- figure 3 is a perspective view of a scaled-up detail from figure 2, and in particular an auxiliary instruments support including the device disclosed;
- figure 4 is a flow chart showing the operating phases of the device disclosed.

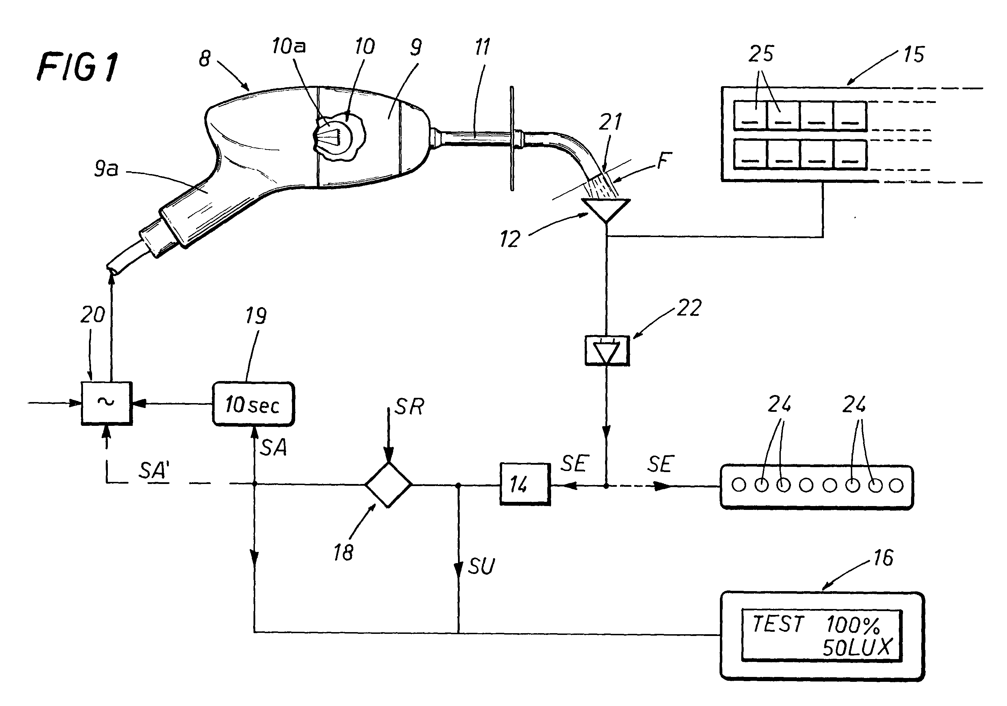

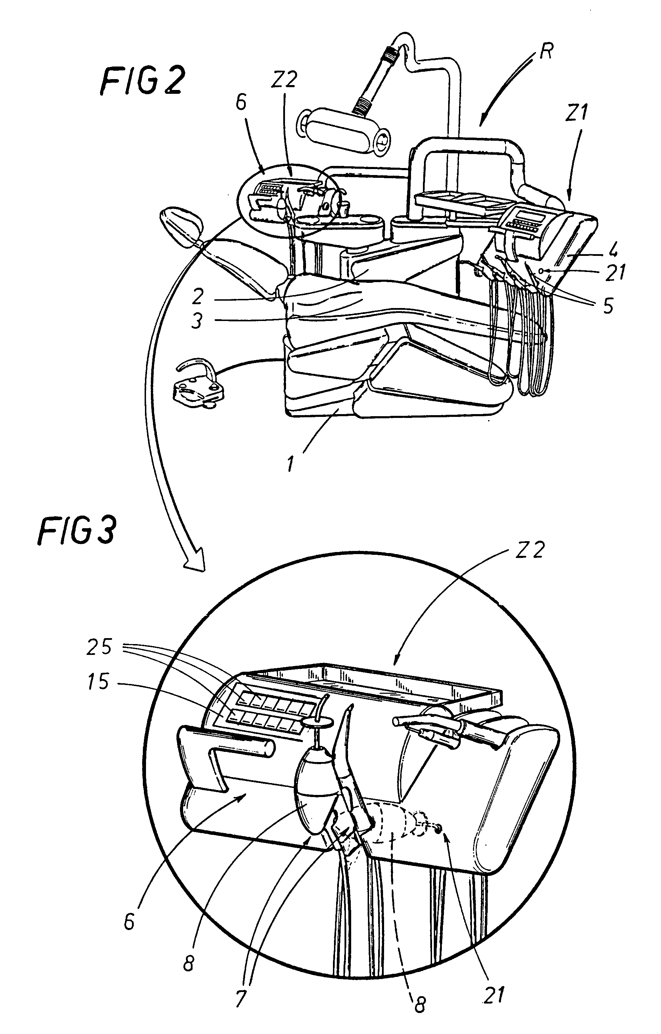

With reference to the accompanying drawings, and especially figures 1 and 2, the control device for a polymerising lamp, denoted by the number 8, is fitted to a dental unit R.

The basic components of the dental unit R include a base 1 supporting a first vertical column 2, the latter being positioned at the side of a chair 3; on opposite sides of the vertical column 2 are a first main support 4 for operating instruments 5 (e.g.: a micro-motor, a turbo-drill, a syringe, etc., only partly shown here, being of the known type and not being part of the present invention), and a second support 6 for auxiliary instruments 7 (such as the polymerising lamp, one or more saliva suction canules, a further syringe, etc.). The said first and second supports 5 and 7 constitute respective operating control zones, denoted by Z1 and Z2, which can be used by the dental surgeon and assistant during a treatment session.

As shown in figure 1, the afore-mentioned polymerising lamp 8 consists of a housing 9 with relative grip 9a, containing means 10 for the generation of light comprised of a halogen bulb 10a connected to means 20 for the supply of power to the latter. The light emitted by the bulb 10a is directed into a tube 11 composed of optic fibres, so that it generates a light flux F directed towards the exterior of the said tube 11, i.e.: the area of a tooth (not illustrated here) filled with a paste to be polymerised.

An integral component of the dental unit R are the means 12 for the detection of the afore-mentioned light flux F, securely fixed to the dental unit at one of the above-mentioned operative control zones Z1 and Z2, more precisely on the second support 6 (as shown in figure 3).

The said means 12 are able to detect the light flux F and convert it into an electrical signal SE which may be displayed on relative means 13, connected to the detector means 12, and again located at one of the operative zones Z1 and Z2.

As can be seen in figure 1, there are many possible embodiments of the device, all based on the assumption that the afore-mentioned means 12 for the detection of the light flux F are located on the second support 6, and housed in the base of a cavity 21 on the said second support 6, specially designed to house the free end of the tube 11 of the lamp 8 from the outside when a control is required, so as to verify the intensity of the light flux.

In a first, simple embodiment, illustrated along the right-hand part of figure 1 (with a partly dashed line), the said detector means 12 may consist of a photometer whose output is connected to an amplifier 22 for the signal SE at output. The amplifier 22 may, in turn, be connected to a voltmeter (not illustrated) which may control, for example, a series of LEDs 24 which define a graduated scale which, according to the signal sent from the photometer, display the intensity of the light flux F for the dental surgeon.

On dental units R of the latest generation, the detector means 12 may be connected to a processing unit or microprocessor 14 which monitors the dental unit (embodiment illustrated in figure 1, on the left-hand side of the drawing); by means of a relative console 15, the microprocessor 14 controls and activates a viewer 16 which constantly displays function data and accessory function data of the afore-mentioned main instruments 5 and auxiliary instruments 7.

In this case, as shown in figure 1, the means 12 for the detection of the light flux F may consist of transducer means for the said light flux F, such as a photodiode, whose output is connected to the signal amplifier 22, in turn connected to the microprocessor 14. The latter is able to send a relative signal SU, proportional to the afore-mentioned electrical signal SE sent by the transducer means 17, to the viewer 16, allowing the display of a data item equal to the quantity of light emitted by the pistol 8 in a unit of time, usually calculated in LUX (i.e.: in a unit of measure equal to the quantity of light, or in a number which is a percentage of the intensity in LUX).

A more complete variation on such a system may be to connect the microprocessor 14 to means 18 for gauging the electrical signal SE sent by the light flux F transducer means, the microprocessor in turn sending a relative activation signal SA to timer means 19 and/or SA' to the afore-mentioned means 20 for the supply of power to the bulb 10a which both act upon the lamp 8, if the electrical signal SE detected is less than a preset reference signal SR on the gauge 18.

In other words, when the light flux F is not perfectly efficient, due to the natural ageing of the bulb 10a, the lamp operating parameters are adjusted, that is to say, the (usual) treatment time or the power supplied to the bulb 10a, so as to obtain a correct polymerising treatment on the pastes.

The device, therefore, allows the dental surgeon to constantly control the perfect efficiency of the polymerising lamp 8 by simply removing the lamp from the support 6 and pointing the tube 11 at the console 15 so that the light flux emitted is substantially perpendicular to the detector means 12 located within the cavity 21.

The control device is activated automatically, or by means of the special selector 25 on the console 15, and detects the light flux F which exits the tube 11.

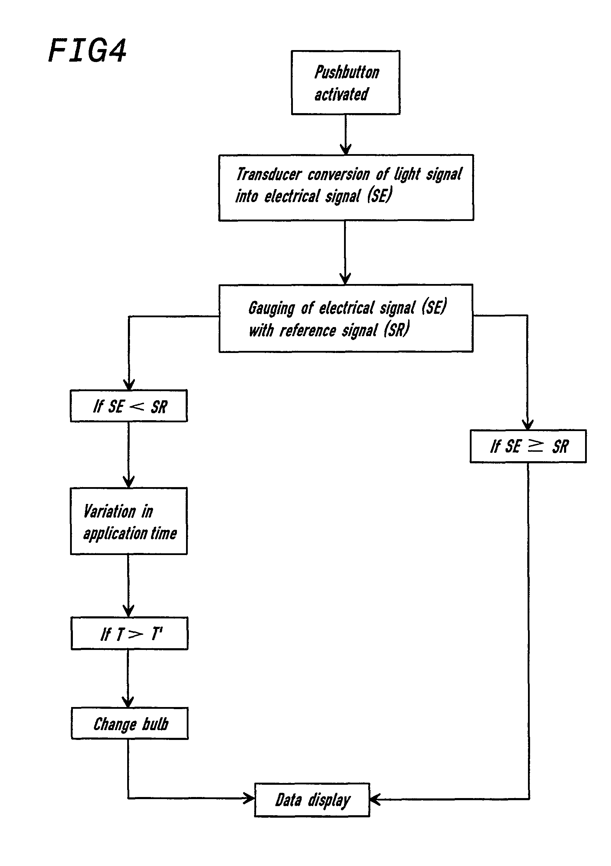

As shown in figure 4, if the measurement taken confirms the perfect efficiency of the lamp, displayed on the viewer 16 or by the LEDs 24, the control operation is concluded; in contrast, if the control indicates a reduction in the light output of the halogen bulb 10a, the microprocessor 14 may make two types of adjustments: it may act upon the relative timer 19 of the lamp 8, extending the time memorised for the treatments, or increase the power supplied to the halogen bulb, said increase being proportional to the drop in the light output detected.

If the device is not controlled by a microprocessor (as illustrated in the first case), the dental surgeon must check the LEDs 24, then directly adjust the parameters of the timer 19 or increase the power supplied to the bulb 10a.

Obviously, in both cases, if the reduction in light output is too great, neither the timing or power supplied to the bulb 10a are adjusted. Instead, the bulb change is required: for example, as illustrated in figure 4, if the maximum variation in the application time ΔT' (usually positive) which can be programmed on the microprocessor 14 is less than the actual variation T required, the change bulb 10a indication is automatically displayed on the viewer 16.

The device, therefore, fulfils the preset objectives thanks to its simple, rational configuration, which is, at the same time, extremely precise in controlling the light flux emitted by the pistol: the entire device being directly attached to the dental unit so as to allow the constant, direct control of lamp efficiency by the dental surgeon or assistant.

Moreover, in the case of particularly advanced dental units, it is possible to obtain the automatic adjustment of the time - power supply variables by the microprocessor which is ready-programmed with the desired parameters.

The present invention, thus designed for the said objects, may be subject to numerous variations, all encompassed by the original design concept, and all components may be replaced with technically equivalent parts.

## Claims

1. Dental unit with a control device for polymerising lamps, the dental unit including a base (1) supporting a first vertical column (2) positioned at the side of a chair (3), a first main support (4) for operating instruments (5) and a second support (6) for auxiliary instruments (7), the first and the second main support (5), (6) constituting operative control zones (Z1, Z2), said auxiliary instruments including the said polymerising lamp (8), said lamp consisting of a housing (9) containing means (10) for the generation of light which is directed into a tube (11) consisting of optic fibres, thus generating a light flux (F) directed towards the exterior of the said tube (11), the control device including means (12) for the detection of the said light flux (F) , said means (12) for the detection of said light flux being configured so as to detect the light flux (F) and convert it into an electrical signal (SE), said means for the detection of said light are securely fixed to the dental unit (R) in the said operative control zone (Z1, Z2), means (13) being provided for the display of the said electrical signal (SE), also connected to the detector means (12).

2. The dental unit as described in claim 1, in which the dental unit (R) is fitted with a processing unit or microprocessor (14) for monitoring the dental unit (R), and which, by means of a relative console (15), activate a viewer (16) for the constant display of function data and accessory function data for the said main instruments (5) and auxiliary instruments (7), **characterised in that** the means (12) for the detection of the light flux (F) consist of transducer means (17) for the light flux (F) whose output is connected to the microprocessor (14), the latter being able to send a relative signal (SU), proportional to the electrical signal (SE) sent by the transducer means (17), to the viewer (16), thus allowing the display of a data item equal to the quantity of light emitted by the polymerizing lamps (8) in a unit of time.

3. The Dental unit as described in claim 2, **characterised in that** the microprocessor (14) is connected to means (18) for gauging the said electrical signal (SE) sent by the transducer means (17) for the light flux (F) and designed to send a relative activation signal (SA) to timing means (19) and/or means (20) for the supply of power to means (10) for the generation of light, both acting upon the said lamp (8), in correspondence with an electrical signal (SE) which is at least less than a reference signal (SR) which may be preset.

4. The dental unit as described in claim 2, **characterised in that** the detector means (12) and the transducer means (17) consist of a photodiode which is connected to the microprocessor (14).

5. The dental unit as described in claim 1, **characterised in that** the detector means (12) consist of a photometer.

6. The dental unit as described in claim 1, **characterised in that** the means (12) for the detection of the light flux (F) are positioned within the second support (6) for the auxiliary instruments (7); said means (12) being housed in the bottom of a cavity (21) in the second support (6), in which the free end of the tube (11) of the lamp (8) can be fitted from the outside.

## Patentansprüche

1. Dentaleinheit mit einer Kontrollvorrichtung für Polymerisierungslampen, wobei die Dentaleinheit eine Basis (1) enthält, die eine erste vertikale Säule (2) trägt, positioniert an der Seite eines Stuhls (3), eine erste Haupthaltevorrichtung (4) für Behandlungsinstrumente (5) und eine zweite Haltevorrichtung (6) für Hilfsinstrumente (7), wobei die ersten und die zweiten Haltevorrichtungen (4), (6) Betriebssteuerbereiche (Z1, Z2) bilden, wobei die genannten Hilfsinstrumente die genannte Polymerisierungslampe (8) enthalten, und wobei die genannte Lampe aus einem Gehäuse (9), enthaltend Mittel (10) zum Erzeugen von Licht, besteht, welches in eine aus Optikfasern bestehende Leitung gerichtet ist und somit einen nach aussen aus der genannten Leitung (11) gerichteten Lichtstrom (F) erzeugt, wobei die Kontrollvorrichtung Erfassungsmittel (12) zum Erfassen des genannten Lichtstromes (F) enthält, wobei die genannten Erfassungsmittel (12) für den genannten Lichtstrom so ausgelegt sind, dass sie den Lichtstrom (F) erfassen und diesen in ein elektrisches Signal (SE) umwandeln, wobei die genannten Erfassungsmittel für den genannten Lichtstrom sicher an der Dentaleinheit (R) befestigt sind, und zwar in dem genannten Betriebssteuerbereich (Z1, Z2), und wobei Mittel (13) zur Anzeige des genannten elektrischen Signals (SE) vorgesehen sind, ebenfalls angeschlossen an die Erfassungsmittel (12).

2. Dentaleinheit nach Patentanspruch 1, bei welcher die Dentaleinheit (R) mit einer Verarbeitungseinheit oder einem Mikroprozessor (14) zum Überwachen der Dentaleinheit (R) versehen ist, und welcher mit Hilfe einer entsprechenden Konsole (15) ein Sichtbarmachungsgerät (16) zur ständigen Anzeige der Funktionsdaten und der Hilfsfunktionsdaten der genannten Hauptinstrumente (5) und Hilfsinstrumente (7) aktiviert, **dadurch gekennzeichnet, dass** die Erfassungsmittel (12) des Lichtstromes (F) aus Umwandlermitteln (17) des Lichtstromes (F) bestehen, deren Ausgang an den Mikroprozessor (14) angeschlossen ist, wobei letzterer in der Lage ist, ein entsprechendes Signal (SU) proportional zu dem von den Umwandlermitteln (17) gelieferten elektrischen Signal (SE) an das Sichtbarmachungsgerät (16) auszusenden und somit die Anzeige eines Wertes zu erlauben, welcher der von der Polymerisierungslampe (8) in einer Zeiteinheit abgegebenen Lichtmenge entspricht.

3. Dentaleinheit nach Patentanspruch 2, **dadurch gekennzeichnet, dass** der Mikroprozessor (14) an Mittel (18) zum Vergleichen des genannten, von den Wandlermitteln (17) des Lichtstromes (F) ausgesandten elektrischen Signals (SE) angeschlossen und dazu bestimmt ist, ein entsprechendes Aktivierungssignal (SA) an Zeitgebermittel (19) und/oder Mittel (20) für die Energiezufuhr an Mittel (10) zum Erzeugen von Licht auszusenden, welche beide auf die genannte Lampe (8) wirken, und zwar entsprechend einem elektrischen Signal (SE), welches wenigstens geringer ist als ein Bezugssignal (SR), welches vorher eingestellt werden kann.

4. Dentaleinheit nach Patentanspruch 2, **dadurch gekennzeichnet, dass** die Erfassungsmittel (12) und die Umwandlermittel (17) aus einer Photodiode bestehen, welche an den Mikroprozessor (14) angeschlossen ist.

5. Dentaleinheit nach Patentanspruch 1, **dadurch gekennzeichnet, dass** die Erfassungsmittel (12) aus einem Lichtmesser bestehen.

6. Dentaleinheit nach Patentanspruch 1, **dadurch gekennzeichnet, dass** die Erfassungsmittel (12) des Lichtstromes (F) im Inneren der zweiten Halterung (6) für die Hilfsinstrumente (7) positioniert sind; wobei die genannten Mittel (12) am Boden einer Vertiefung (21) in der zweiten Halterung (6) angeordnet sind, in welche das freie Ende der Leitung (11) der Lampe (8) von aussen her eingelegt werden kann.

## Revendications

1. Unité dentaire avec dispositif de contrôle pour lampes à polymériser, comprenant une base **(1)** de support d'une première colonne verticale **(2)** située à côté d'un fauteuil **(3)**, ainsi qu'un premier support principal **(4)** pour les instruments principaux **(5)** et un second support **(6)** pour les instruments auxiliaires **(7)**, les premier et second supports **(4)**, **(6)** constituant deux zones de contrôle des opérations **(Z1, Z2)** et lesdits instruments auxiliaires comprenant ladite lampe à polymériser **(8)**, qui consiste en un boîtier **(9)** renfermant des moyens **(10)** pour la génération de lumière, laquelle est canalisée à l'intérieur d'un conduit **(11)** à fibres optiques, de sorte que le flux lumineux **(F)** ainsi généré soit dirigé vers l'extérieur dudit conduit **(11)**, ledit dispositif de contrôle comprenant des moyens **(12)** pour la détection dudit flux lumineux **(F)** et sa conversion en un signal électrique **(SE),** lesquels sont solidement fixés à l'unité dentaire **(R)**, lesdits moyens **(12)** pour la détection dudit flux lumineux étant configurés de manière à détecter le flux lumineux **(F)** et à le convertir en un signal électrique **(SE),** lesquels moyens pour la détection dudit flux lumineux sont solidement fixés à l'unité dentaire **(R)** dans lesdites zones de contrôle des opérations **(Z1, Z2),** et des moyens **(13),** également reliés aux moyens de détection **(12)** étant prévus pour la visualisation dudit signal électrique **(SE)**.

2. L'unité dentaire selon la revendication 1, dotée d'une unité de traitement ou microprocesseur **(14)** pour le contrôle de l'unité dentaire **(R)** et qui, par l'intermédiaire d'une console **(15)**, active un afficheur **(16)** pour la visualisation continue des données de fonction et des données de fonction accessoires relatives auxdits instruments principaux **(5)** et instruments auxiliaires **(7), caractérisée en ce que** les moyens **(12)** de détection du flux lumineux **(F)** consistent en des moyens de transduction **(17)** du flux lumineux **(F)**, dont la sortie est connectée au microprocesseur **(14)**, lequel est en mesure d'envoyer un signal correspondant **(SU)**, proportionnel audit signal électrique **(SE)** transmis par les moyens de transduction **(17)**, à l'afficheur **(16)**, permettant ainsi la visualisation d'une donnée dont la valeur est égale à la quantité de lumière émise par les lampes à polymériser **(8)** en une unité de temps donnée.

3. L'unité dentaire selon la revendication 2, **caractérisée en ce que** le microprocesseur **(14)** est connecté à des moyens **(18)** de mesure dudit signal électrique **(SE)** transmis par les moyens de transduction **(17)** du flux lumineux **(F)** et conçus de manière à envoyer un signal d'activation correspondant **(SA)** à des moyens de temporisation **(19)** et/ou des moyens **(20)** pour l'alimentation électrique de moyens **(10)** de génération de lumière, les deux agissant sur ladite lampe **(8)**, en correspondance d'un signal électrique **(SE)** qui est au moins inférieur à un signal de référence **(SR)** pouvant être préalablement défini.

4. L'unité dentaire selon la revendication 2, **caractérisée en ce que** les moyens de détection **(12)** et les moyens de transduction **(17)** consistent en une photodiode connectée au microprocesseur **(14)**.

5. L'unité dentaire selon la revendication 1, **caractérisée en ce que** les moyens de détection **(12)** sont un photomètre.

6. L'unité dentaire selon la revendication 1, **caractérisée en ce que** les moyens de détection **(12)** du flux lumineux **(F)** sont placés à l'intérieur du second support **(6)** des instruments auxiliaires **(7)** ; lesdits moyens de détection **(12)** étant logés au fond d'une cavité **(21)** dans le second support **(6)**, où l'extrémité libre du conduit **(11)** de la lampe **(8)** peut être insérée depuis l'extérieur.
